# EUROPEAN PATENT APPLICATION

(11) **EP 2 684 653 A1**
(43) Date of publication of application: **15.01.2014**
(21) Application number: 13154343.1
(22) Date of filing: 07.02.2013
(51) Int. Cl.: B25J 15/00

(54) **Robot system and method for manufacturing fitting**

(30) Priority: 20.06.2012 JP 2012138295; 20.06.2012 JP 2012138296
(71) Applicant: Kabushiki Kaisha Yaskawa Denki, Kitakyushu-Shi Fukuoka 806 (JP)
(72) Inventor: Izumi, Tetsuro, Kitakyushu-shi, Fukuoka 806-0004 (JP); Hashiguchi, Yukio, Kitakyushu-shi, Fukuoka 806-0004 (JP); Fukuda, Takuya, Kitakyushu-shi, Fukuoka 806-0004 (JP); Nagai, Ryoichi, Kitakyushu-shi, Fukuoka 806-0004 (JP)
(74) Representative: Viering, Jentschura & Partner

(57) **Abstract**

In this robot system (100), a control portion (21) includes a workpiece supporting operation command portion (21a), a workpiece positioning operation command portion (21b) causing a second robot arm (12) to move a workpiece (200) toward a workpiece fitted portion (202) while causing an end effector (16) of the second robot arm to support the workpiece, and a fitting operation command portion (21c) causing a first robot arm (11) to fit the workpiece into the workpiece fitted portion.

## Description

### BACKGROUND OF THE INVENTION

### Field of the Invention

The present invention relates to a robot system and a method for manufacturing a fitting.

### Description of the Background Art

A robot system including a robot arm mounted with an end effector (hand) grasping a workpiece (pin) is known in general, as disclosed in Japanese Patent Laying-Open No. 2003-127081, for example. A robot system according to the aforementioned Japanese Patent Laying-Open No. 2003-127081 includes a robot arm. This robot system is configured to grasp a pin by a hand provided on the robot arm and fit the pin grasped by the hand into a hole of a fitted member. It is considered that an operation of fitting the pin grasped by the hand of the robot arm into the hole of the fitted member is previously taught in this robot system.

However, in the robot system according to the aforementioned Japanese Patent Laying-Open No. 2003-127081, it is difficult to fit the pin into the hole of the fitted member or it may take a fair amount of time to perform the fitting operation even if the robot arm operates on the basis of the previously taught operation when the posture of a workpiece with respect to an object to be fitted is inappropriate.

### SUMMARY OF THE INVENTION

The present disclosure has been proposed in order to solve the aforementioned problem, and an object of the present invention is to provide a robot system and a method for manufacturing a fitting each capable of fitting a workpiece more efficiently.

In order to attain the aforementioned object, a robot system according to a first aspect is a robot system fitting a workpiece into a workpiece fitted portion and, includes a first robot arm and a second robot arm each mounted with an end effector and a control portion to control the first robot arm and the second robot arm, while the control portion includes a workpiece supporting operation command portion causing at least one of the first robot arm and the second robot arm to perform an operation of supporting the workpiece, a workpiece positioning operation command portion causing the second robot arm to move the workpiece toward the workpiece fitted portion while causing the end effector of the second robot arm to support the workpiece, and a fitting operation command portion causing at least the first robot arm of the first robot arm and the second robot arm to fit the workpiece into the workpiece fitted portion.

In this robot system according to the first aspect, as hereinabove described, the control portion is configured to have the workpiece positioning operation command portion causing the second robot arm to move the workpiece toward the workpiece fitted portion while causing the end effector of the second robot arm to support the workpiece and the fitting operation command portion causing at least the first robot arm of the first robot arm and the second robot arm to fit the workpiece into the workpiece fitted portion. Thus, the workpiece can be fitted into the workpiece fitted portion by at least the first robot arm of the first robot arm and the second robot arm while the forward end side of the workpiece is supported by the end effector of the second robot arm, and hence the workpiece can be more efficiently fitted into the workpiece fitted portion.

A method for manufacturing a fitting according to a second aspect is a method for manufacturing a fitting formed by fitting a workpiece into a workpiece fitted portion, and includes supporting the workpiece by at least one of a first robot arm and a second robot arm, moving the workpiece toward the workpiece fitted portion by the second robot arm while supporting the workpiece by an end effector of the second robot arm, and fitting the workpiece into the workpiece fitted portion by at least the first robot arm of the first robot arm and the second robot arm.

This method for manufacturing a fitting according to the second aspect includes moving the workpiece toward the workpiece fitted portion by the second robot arm while supporting the workpiece by the end effector of the second robot arm and fitting the workpiece into the workpiece fitted portion by at least the first robot arm of the first robot arm and the second robot arm. Thus, the workpiece can be fitted into the workpiece fitted portion by the first robot arm while the forward end side of the workpiece is supported by the end effector of the second robot arm, and hence the method for manufacturing a fitting capable of more efficiently fitting the workpiece into the workpiece fitted portion can be provided.

Due to the aforementioned structure, the workpiece can be more efficiently fitted.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is an overall view of a robot system according to a first embodiment;
Fig. 2 is a perspective view of a workpiece according to the first embodiment;
Fig. 3 is a front elevational view of the workpiece according to the first embodiment as viewed from a fitting direction;
Fig. 4 is a perspective view of a workpiece fitted member according to the first embodiment;
Fig. 5 is a front elevational view of the workpiece fitted member according to the first embodiment as viewed from the fitting direction;
Fig. 6 is a perspective view of an end effector of the robot system according to the first embodiment;
Fig. 7 illustrates a state where the end effector of the robot system according to the first embodiment grasps the workpiece, as viewed from the fitting direction;
Fig. 8 illustrates a state where a guiding end effector of the robot system according to the first embodiment guides the workpiece, as viewed from the fitting direction;
Fig. 9 illustrates a state where the guiding end effector of the robot system according to the first embodiment guides the downwardly bent workpiece, as viewed from the fitting direction;
Fig. 10 illustrates a state where the guiding end effector of the robot system according to the first embodiment guides the laterally bent workpiece, as viewed from the fitting direction;
Fig. 11 is a block diagram of the robot system according to the first embodiment;
Fig. 12 is a block diagram of a control portion of the robot system according to the first embodiment;
Fig. 13 is a flowchart for illustrating operations of the control portion of the robot system according to the first embodiment;
Fig. 14 illustrates a state where the end effector of the robot system according to the first embodiment grasps the workpiece;
Fig. 15 illustrates a state where the guiding end effector of the robot system according to the first embodiment guides the workpiece;
Fig. 16 is a sectional view showing a state where the guiding end effector guides the workpiece while the end effector of the robot system according to the first embodiment grasps the workpiece;
Fig. 17 illustrates a state where the end effector of the robot system according to the first embodiment translates and rotates the workpiece;
Fig. 18 illustrates a state where the end effector of the robot system according to the first embodiment fits the workpiece into the workpiece fitted portion (fitting operation);
Fig. 19 is an overall view of a robot system according to a second embodiment;
Fig. 20 is a flowchart for illustrating operations of a control portion of the robot system according to the second embodiment;
Fig. 21 illustrates a state prior to guiding of a workpiece of the robot system according to the second embodiment;
Fig. 22 is an enlarged view showing the state prior to guiding of the workpiece shown in Fig. 21;
Fig. 23 illustrates a state where an end effector of the robot system according to the second embodiment guides the workpiece;
Fig. 24 illustrates a state where the workpiece of the robot system according to the second embodiment is fitted into a workpiece fitted portion;
Fig. 25 is a front elevational view of a workpiece according to a third embodiment as viewed from a fitting direction;
Fig. 26 illustrates a state where an end effector of a robot system according to the third embodiment grasps the workpiece, as viewed from the fitting direction;
Fig. 27 illustrates a state where an aligning end effector of the robot system according to the third embodiment aligns the workpiece, as viewed from the fitting direction;
Fig. 28 is a block diagram of the robot system according to the third embodiment;
Fig. 29 is a block diagram of a control portion of the robot system according to the third embodiment;
Fig. 30 is a flowchart for illustrating operations of the control portion of the robot system according to the third embodiment;
Fig. 31 illustrates a state where the aligning end effector of the robot system according to the third embodiment aligns the workpiece;
Fig. 32 illustrates a state where an end effector of a robot system according to a fourth embodiment guides a workpiece; and
Fig. 33 illustrates a state where a visual sensor is mounted on a robot arm of a robot system according to a modification.

### DESCRIPTION OF THE EMBODIMENTS

Embodiments are now described with reference to the drawings.

### (First Embodiment)

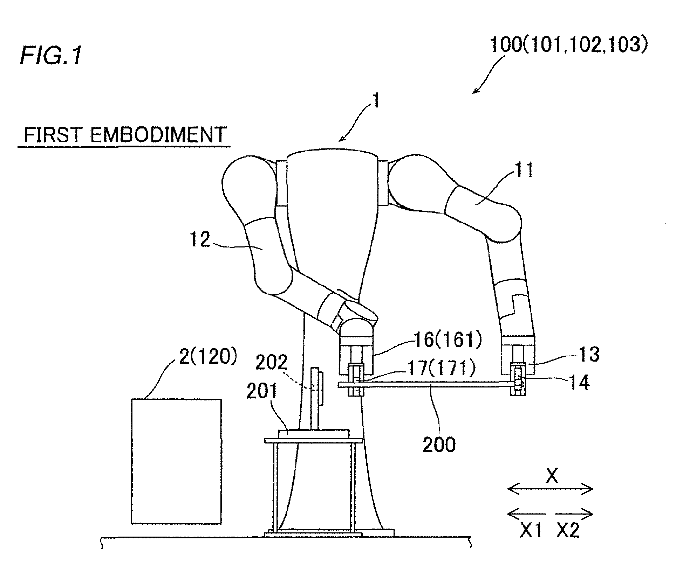

First, the structure of a robot system 100 according to a first embodiment is described with reference to Figs. 1 to 11.

As shown in Fig. 1, the robot system 100 includes a robot 1 and a robot controller 2. A workpiece fitted member 201 into which a workpiece 200 is fitted is arranged in the vicinity of the robot 1.

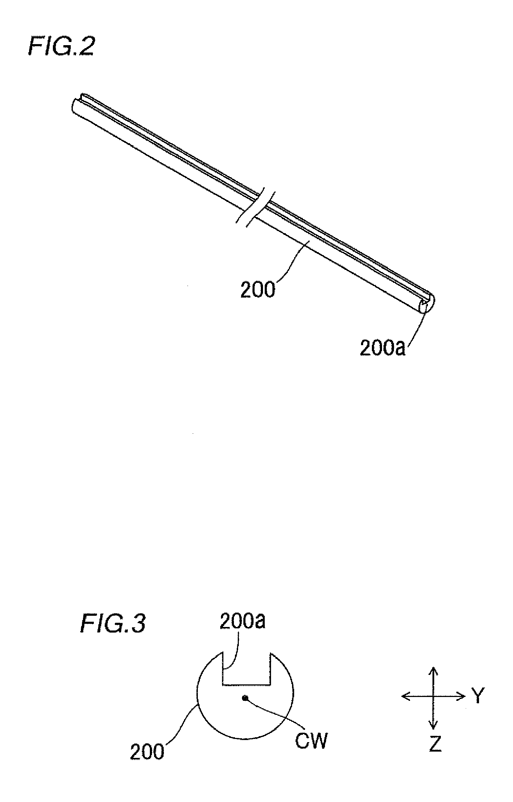

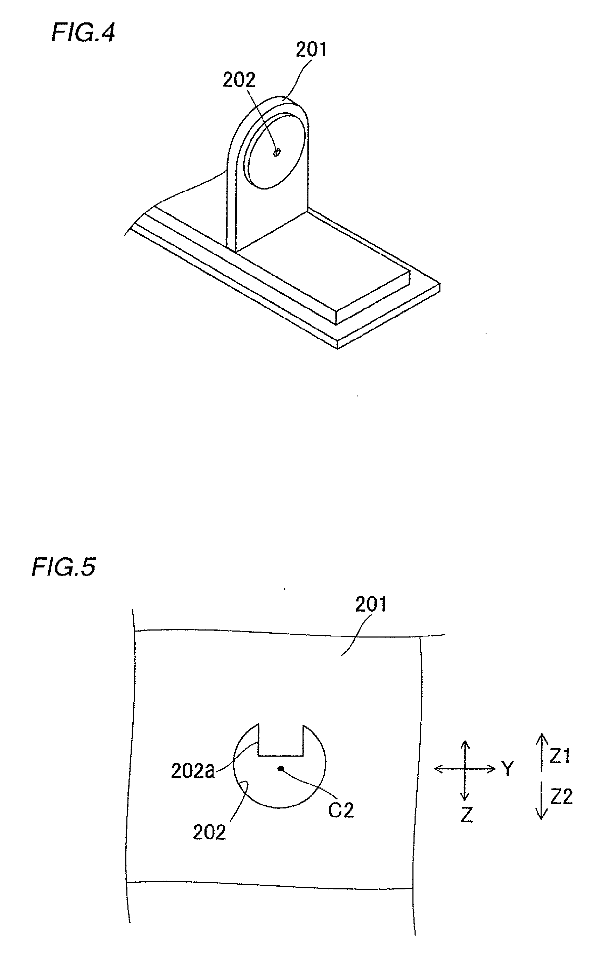

According to the first embodiment, the workpiece 200 is long bar-shaped, as shown in Fig. 2. Furthermore, the workpiece 200 has an incomplete circular cross-section, as shown in Fig. 3. Specifically, the workpiece 200 is formed with a groove portion 200a having a rectangular cross-section along the extensional direction of the workpiece 200. As shown in Figs. 4 and 5, the workpiece fitted member 201 is provided with a workpiece fitted portion 202 formed by an incomplete circular hole substantially coinciding with the cross-sectional shape of the workpiece 200. Specifically, the workpiece fitted portion 202 has a projecting portion 202a protruding downward (along arrow Z2) to correspond to the groove portion 200a of the workpiece 200. Furthermore, the workpiece fitted portion 202 is formed by a through-hole. A control portion 21, described later, of the robot controller 2 is configured to perform control of moving the workpiece 200 in a transverse direction (direction X) and fitting the workpiece 200 into the workpiece fitted portion 202.

As shown in Fig. 1, the robot 1 is a vertical articulated robot and includes two robot arms 11 and 12. The robot arm 11 has built-in actuators (not shown) with servomotors and speed reducers to correspond to rotation axes (seven axes, for example). Each of the servomotors is connected to the robot controller 2 and so configured that the operation thereof is controlled on the basis of an operation command from the robot controller 2. The robot arms 11 and 12 are examples of the "first robot arm" and the "second robot arm", respectively.

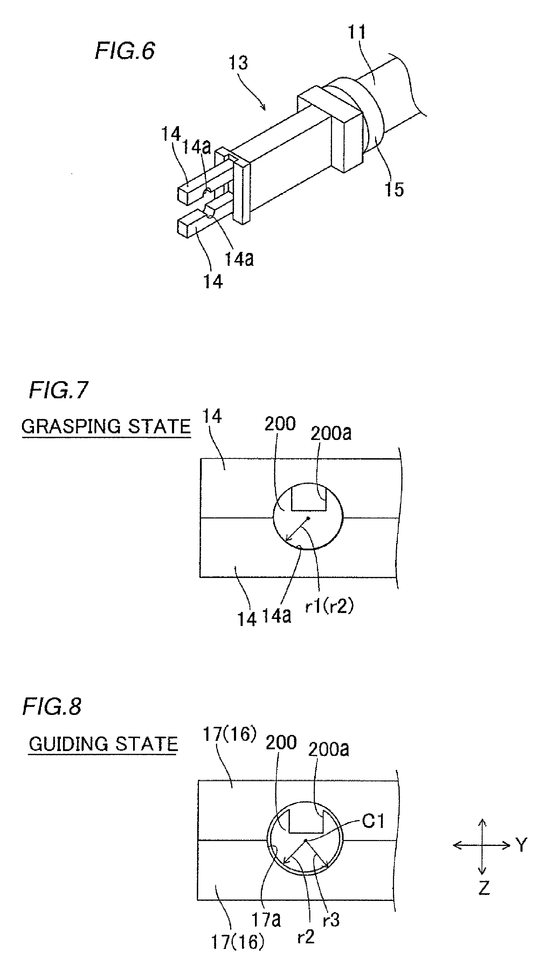

According to the first embodiment, an end effector 13 to grasp the base side (along arrow X2) of the workpiece 200 distanced from the workpiece fitted portion 202 into which the workpiece 200 is fitted is mounted on the forward end of the robot arm 11. As shown in Fig. 6, the end effector 13 is provided with a pair of claw portions 14 openable and closable by the unshown actuator, which are a gripper capable of grasping and holding the workpiece 200, according to the first embodiment. The claw portions 14 are provided with groove portions 14a having semicircular cross-sections. As shown in Fig. 7, the groove portions 14a are so configured that the radius r1 of each of the groove portions 14a is substantially equal to the radius r2 of the workpiece 200. The claw portions 14 are configured to come into contact with the workpiece 200 in a closed state to grasp the workpiece 200.

According to the first embodiment, a force sensor 15 is mounted between the robot arm 11 and the end effector 13, as shown in Fig. 6. The force sensor 15 is configured as a six-axis force sensor capable of detecting the translational force of an X-axis, a Y-axis, and a Z-axis and the rotation moments of the X-axis, the Y-axis, and the Z-axis.

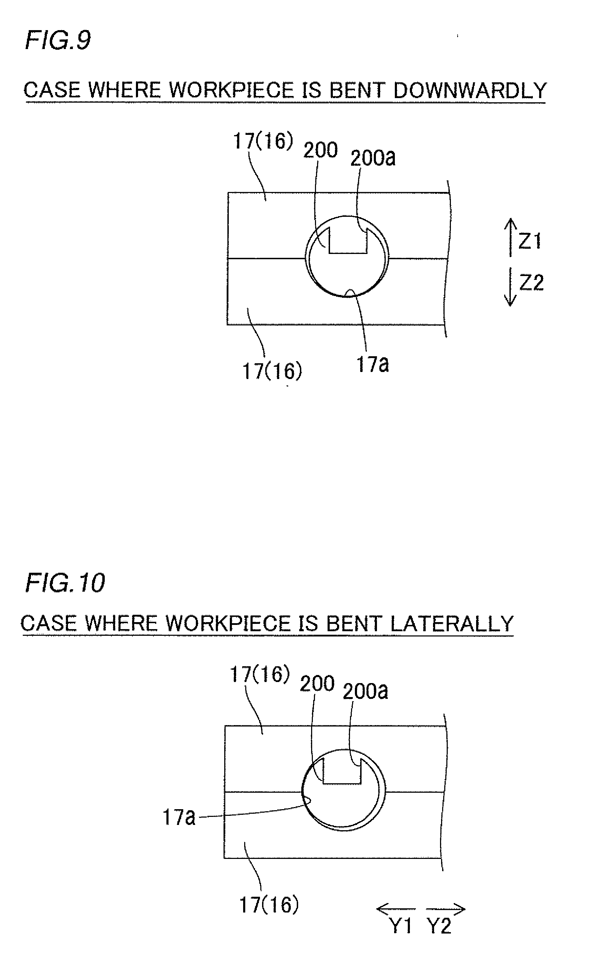

According to the first embodiment, a guiding end effector 16 to guide the workpiece 200 while movably grasping the forward end side (along arrow X1) of the workpiece 200 in the vicinity of the workpiece fitted portion 202 is mounted on the forward end of the robot arm 12, as shown in Fig. 1. The guiding end effector 16 is a guide having at least a guide portion slidably supporting the workpiece 200. According to the first embodiment, the guiding end effector 16 is provided with a pair of claw portions 17 openable and closable by the unshown actuator, as shown in Fig. 8. The claw portions 17 are provided with groove portions 17a having semicircular cross-sections. The groove portions 17a are so configured that the radius r3 of each of the groove portions 17a is larger than the radius r2 of the workpiece 200. Thus, a clearance is generated between the groove portions 17a and the workpiece 200 in a state where the claw portions 17 are closed, whereby the guiding end effector 16 can guide the workpiece 200 while movably grasping the forward end side of the workpiece 200. The guiding end effector 16 of the robot arm 12 is configured to guide the long bar-shaped workpiece 200 while movably surrounding the periphery (outer periphery) of the workpiece 200 on the forward end side. If the workpiece 200 is bent downwardly (along arrow Z2), the workpiece 200 is guided in a state where a lower portion (lower surface) of the workpiece 200 comes into contact with one of the groove portions 17a, as shown in Fig. 9. If the workpiece 200 is bent laterally (along arrow Y1), the workpiece 200 is guided in a state where a side portion (side surface) of the workpiece 200 comes into contact with the groove portions 17a, as shown in Fig. 10. The guiding end effector 16 is an example of the "end effector".

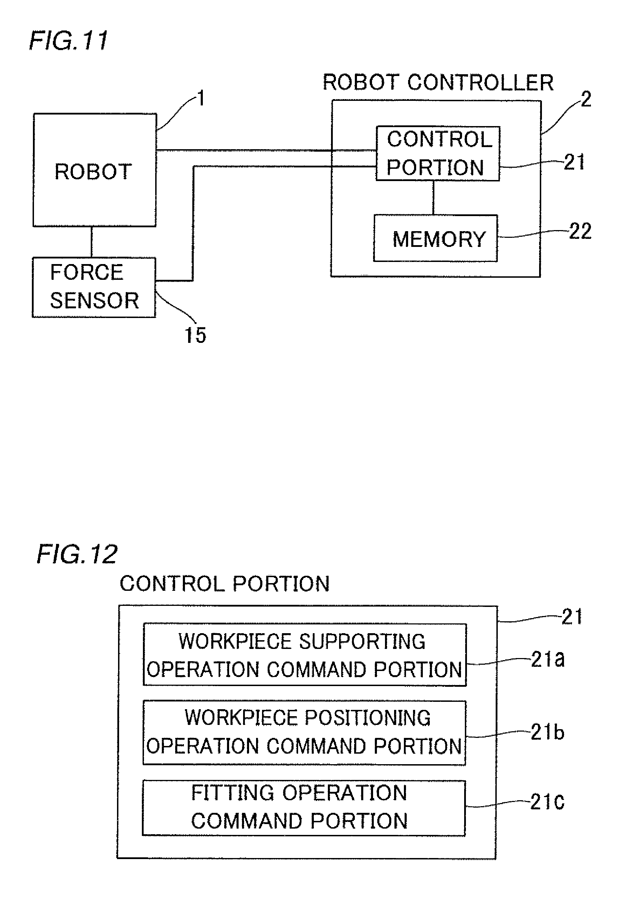

According to the first embodiment, the control portion 21 (see Fig. 11), described later, of the robot controller 2 is configured to perform control of fitting the workpiece 200 into the workpiece fitted portion 202 by grasping the base side of the workpiece 200 distanced from the workpiece fitted portion 202 into which the workpiece 200 is fitted by the end effector 13 of the robot arm 11 and guiding the workpiece 200 while movably grasping the forward end side of the workpiece 200 in the vicinity of the workpiece fitted portion 202 by the guiding end effector 16 of the robot arm 12.

As shown in Fig. 11, the robot controller 2 is provided with the control portion 21 and a memory 22. The memory 22 is connected to the control portion 21. The robot 1 and the force sensor 15 are connected to the control portion 21 of the robot controller 2. According to the first embodiment, the control portion 21 has a workpiece supporting operation command portion 21a causing at least one of the robot arm 11 and the robot arm 12 to perform an operation of supporting (grasping) the workpiece 200, a workpiece positioning operation command portion 21b causing the robot arm 12 to move the workpiece 200 toward the workpiece fitted portion 202 (to the vicinity of the workpiece fitted portion 202) while causing the guiding end effector 16 of the robot arm 12 to movably support (grasp) the workpiece 200, and a fitting operation command portion 21c causing the robot arm 11 to fit the workpiece into the workpiece fitted portion 202 while causing the guiding end effector 16 of the robot arm 12 to guide the workpiece 200 toward the workpiece fitted portion 202, as shown in Fig. 12.

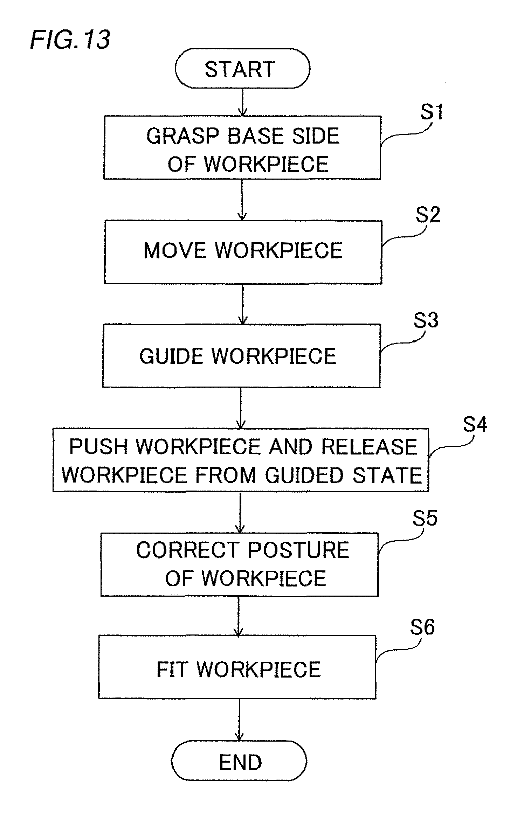

Next, operations of the control portion 21 of the robot controller 2 for fitting the workpiece 200 into the workpiece fitted portion 202 are described with reference to Figs. 13 to 18.

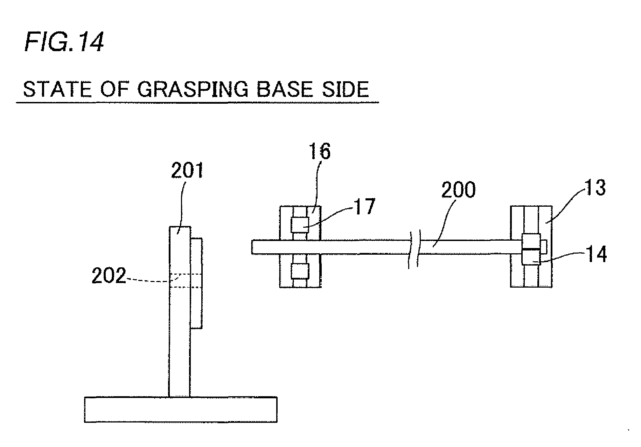

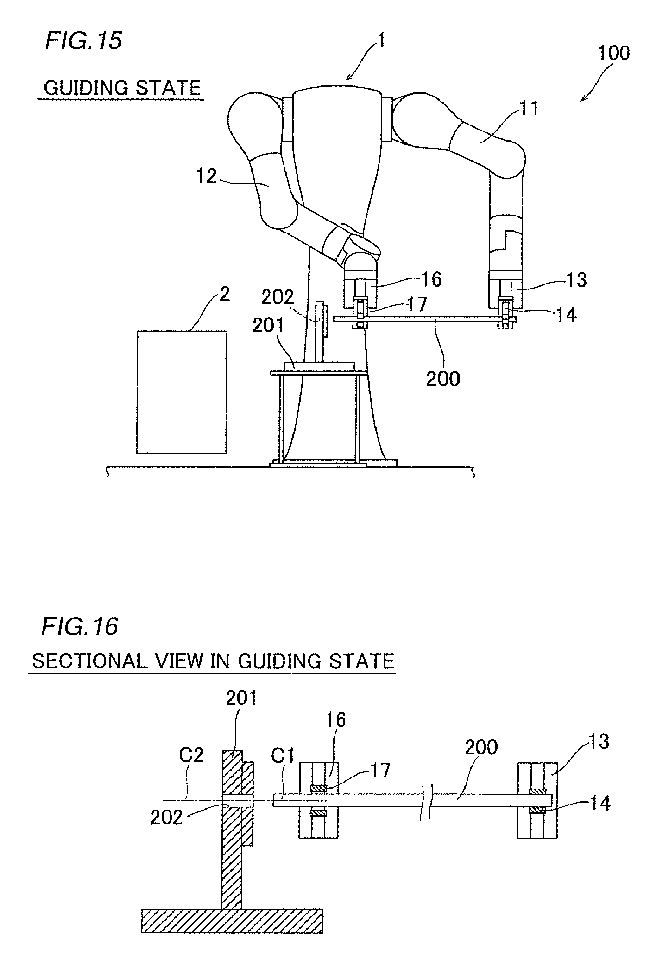

First, at a step S1 shown in Fig. 13, the control portion 21 controls the end effector 13 (claw portions 14) of the robot arm 11 to grasp the base side of the workpiece 200 distanced from the workpiece fitted portion 202, as shown in Fig. 14. At this time, the guiding end effector 16 (claw portions 17) of the robot arm 12 is in an open state. Next, at a step S2, the control portion 21 controls the robot arm 11 to move the workpiece 200 so as to arrange the forward end side of the workpiece 200 in the vicinity of the workpiece fitted portion 202, as shown in Figs. 15 and 16.

According to the first embodiment, at a step S3, the control potion 21 controls the guiding end effector 16 of the robot arm 12 to guide the workpiece 200 while movably grasping the forward end side of the workpiece 200 in the vicinity of the workpiece fitted portion 202. Specifically, the control portion 21 controls the guiding end effector 16 of the robot arm 12 to guide the workpiece 200 while movably grasping the forward end side of the workpiece 200 such that a centerline C1 passing through the guide center (center in directions Y and Z, see Fig. 8) of the guiding end effector 16 (groove portions 17a of the claw portions 17) of the robot arm 12 as viewed from a fitting direction and a centerline C2 passing through the center (center in the directions Y and Z, see Fig. 5) of the workpiece fitted portion 202 as viewed from the fitting direction substantially coincide with each other, as shown in Fig. 16. Thus, the posture (form) of the workpiece 200 is corrected to be fittable (fittable by rotating the workpiece 200, as described later) even if the forward end side of the workpiece 200 is warped or the workpiece 200 is grasped in a state deviating from (intersecting with) the fitting direction.

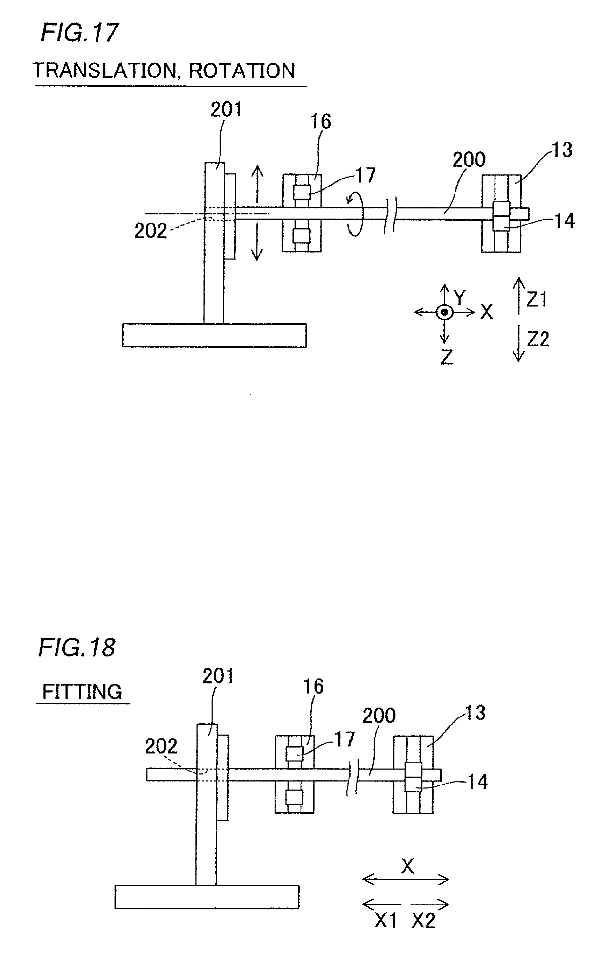

Then, according to the first embodiment, at a step S4, the control portion 21 operates the robot arm 11 in a state where the guiding end effector 16 of the robot arm 12 guides the workpiece 200 while movably grasping the forward end side of the workpiece 200 to push the workpiece 200 toward the workpiece fitted portion 202 (workpiece fitted member 201), as shown in Fig. 17. Thereafter, the control portion 21 releases the workpiece 200 from a state guided by the robot arm 12 before fitting the workpiece 200 into the workpiece fitted portion 202.

Then, according to the first embodiment, at a step S5, after pushing the workpiece 200 against the workpiece fitted portion 202 (workpiece fitted member 201), the control portion 21 operates the robot arm 11 on the basis of reaction force information obtained from the force sensor 15 when pushing the workpiece 200 against the workpiece fitted portion 202. Thus, the posture of the workpiece 200 is corrected to be fittable into the workpiece fitted portion 202. Specifically, the control portion 21 performs control of correcting the posture of the workpiece 200 to be fittable into the workpiece fitted portion 202 by rotating the workpiece 200 on the basis of the reaction force information obtained from the force sensor 15 (until reaction force from the workpiece fitted portion 202 (workpiece fitted member 201) is no longer detected, for example), employing the pushing direction (direction X) of the workpiece 200 as a rotation axis, as shown in Fig. 17. More specifically, the control portion 21 performs control of correcting the posture of the workpiece 200 to direct an opening of the groove portion 200a (see Fig. 3) of the workpiece 200 along arrow Z1 (match the groove portion 200a and the projecting portion 202a of the workpiece fitted portion 202). If the posture (form) of the workpiece 200 is not fittable (fittable by rotating the workpiece 200) even in a state where the workpiece 200 is guided, the workpiece 200 is translated with respect to the workpiece fitted portion 202 (workpiece fitted member 201) (on a plane Y-Z) in order to search the workpiece fitted portion 202.

Then, at a step S6, the control portion 21 controls the robot arm 11 to move the workpiece 200 in the transverse direction (along arrow X1) and starts an operation of fitting the workpiece 200 into the workpiece fitted portion 202. If the force sensor 15 detects reaction force during the operation of fitting the workpiece 200 into the workpiece fitted portion 202, the control portion 21 controls the robot arm 11 to correct the posture of the workpiece 200 in a direction in which the reaction force is not detected. This ends the operations for fitting the workpiece 200 into the workpiece fitted portion 202.

According to the first embodiment, as hereinabove described, the control portion 21 is configured to have the fitting operation command portion 21c causing the robot arm 11 to fit the workpiece 200 into the workpiece fitted portion 202 while causing the guiding end effector 16 of the robot arm 12 to guide the workpiece 200 toward the workpiece fitted portion 202. Thus, the workpiece 200 can be fitted into the workpiece fitted portion 202 by the robot arm 11 while the forward end side of the workpiece 200 is guided by the guiding end effector 16 of the robot arm 12, and hence the workpiece 200 can be more efficiently fitted into the workpiece fitted portion 202.

According to the first embodiment, as hereinabove described, the workpiece positioning operation command portion 21b of the control portion 21 is configured to control the guiding end effector 16 of the robot arm 12 to guide the workpiece 200 while movably grasping the forward end side of the workpiece 200 such that the centerline C1 passing through the guide center of the guiding end effector 16 (groove portions 17a of the claw portions 17) of the robot arm 12 as viewed from the fitting direction and the centerline C2 passing through the center of the workpiece fitted portion 202 as viewed from the fitting direction substantially coincide with each other. Thus, the forward end side of the workpiece 200 can be easily fitted into the workpiece fitted portion 202.

According to the first embodiment, as hereinabove described, the fitting operation command portion 21c of the control portion 21 is configured to release the workpiece 200 from the state guided by the robot arm 12, after operating the robot arm 11 to push the workpiece 200 toward the workpiece fitted portion 202 in the state where the guiding end effector 16 of the robot arm 12 guides the workpiece 200 while movably grasping the forward end side of the workpiece 200 and before fitting the workpiece 200 into the workpiece fitted portion 202. Thus, the guiding end effector 16 of the robot arm 12 can be inhibited from disturbing translation or rotation of the workpiece 200 when the workpiece 200 is translated or rotated in order to search the workpiece fitted portion 202.

According to the first embodiment, as hereinabove described, the fitting operation command portion 21c of the control portion 21 is configured to perform control of correcting the posture of the workpiece 200 to be fittable into the workpiece fitted portion 202 by pushing the workpiece 200 against the workpiece fitted portion 202 and operating the robot arm 11 on the basis of the reaction force information obtained from the force sensor 15 when pushing the workpiece 200 against the workpiece fitted portion 202, after releasing the workpiece 200 from the state guided by the robot arm 12 and before fitting the workpiece 200 into the workpiece fitted portion 202. Thus, the posture of the workpiece 200 is corrected to be fittable into the workpiece fitted portion 202 even if the posture of the workpiece 200 is not fittable into the workpiece fitted portion 202, and hence the workpiece 200 can be smoothly fitted into the workpiece fitted portion 202. Especially because the workpiece 200 is pushed in a previously guided state, the position of the workpiece 200 on the forward end side does not significantly deviate from the workpiece fitted portion 202. Thus, the workpiece 200 can be smoothly fitted into the workpiece fitted portion 202 without significantly correcting the posture (position) of the workpiece 200.

According to the first embodiment, as hereinabove described, the fitting operation command portion 21c of the control portion 21 is configured to perform control of correcting the posture of the workpiece 200 to be fittable into the workpiece fitted portion 202 by rotating the workpiece 200, employing the pushing direction of the workpiece 200 as the rotation axis, after releasing the workpiece 200 from the state guided by the robot arm 12 and before fitting the workpiece 200 into the workpiece fitted portion 202 by the robot arm 11. Thus, the workpiece 200 can be rotated employing the pushing direction of the workpiece 200 as the rotation axis to be easily fitted into the workpiece fitted portion 202, even if the opening direction of the groove portion 200a of the workpiece 200 and the protruding direction of the projecting portion 202a of the workpiece fitted portion 202 do not coincide with each other whereas a centerline CW (see Fig. 3) passing through the center of the workpiece 200 as viewed from the fitting direction and the centerline C2 of the workpiece fitted portion 202 coincide with each other.

According to the first embodiment, the control portion 21 is configured to perform control of moving the workpiece 200 in the transverse direction and fitting the workpiece 200 into the workpiece fitted portion 202. The posture (form) of the long bar-shaped workpiece 200 is likely to become inappropriate due to deflection or the like caused by its own weight when the long bar-shaped workpiece 200 is fitted in a laid state, and hence the long bar-shaped workpiece 200 can be easily fitted into the workpiece fitted portion 202 by guiding the workpiece 200 while movably grasping the forward end side of the workpiece 200 in this case.

According to the first embodiment, as hereinabove described, the control portion 21 is configured to control the guiding end effector 16 of the robot arm 12 to guide the workpiece 200 while movably surrounding the periphery of the long bar-shaped workpiece 200 on the forward end side. Thus, the guiding end effector 16 of the robot arm 12 can easily guide the workpiece 200 while movably grasping the forward end side of the workpiece 200 even if the workpiece 200 is bent (deformed) in any direction of outer peripheral directions (see Figs. 9 and 10).

### (Second Embodiment)

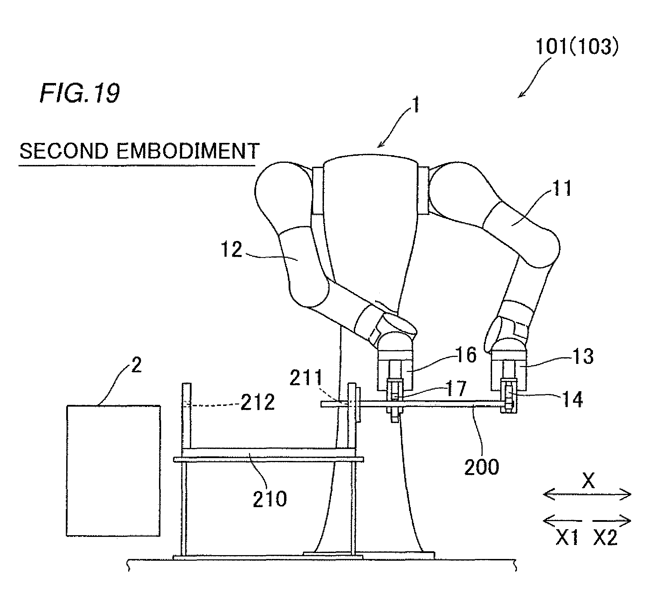

First, the structure of a robot system 101 according to a second embodiment is described with reference to Fig. 19. In this second embodiment, a workpiece 200 is fitted into two workpiece fitted portions 211 and 212, dissimilarly to the aforementioned first embodiment in which the workpiece 200 is fitted into the single workpiece fitted portion 202. The workpiece fitted portions 211 and 212 are examples of the "first workpiece fitted portion" and the "second workpiece fitted portion", respectively.

As shown in Fig. 19, a workpiece fitted member 210 into which the workpiece 200 is fitted is arranged in the vicinity of a robot 1. The workpiece fitted member 210 includes the workpiece fitted portion 211 and the workpiece fitted portion 212 formed by through-holes arranged adjacent to each other in the fitting direction (direction X) of the workpiece 200. The workpiece fitted portion 211 and the workpiece fitted portion 212 each are formed by an incomplete circular hole substantially coinciding with the cross-sectional shape of the workpiece 200, similarly to the workpiece fitted portion 202 (see Fig. 5) according to the aforementioned first embodiment. The remaining structure of the robot system 101 according to the second embodiment is similar to that of the robot system 100 according to the aforementioned first embodiment.

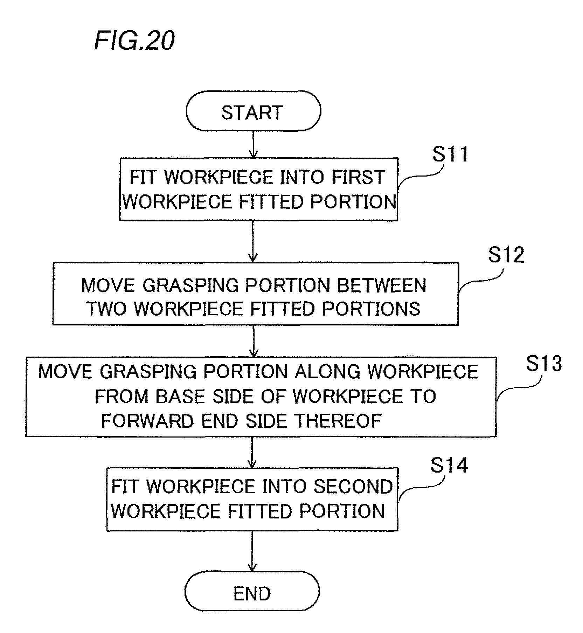

Next, operations of a control portion 21 of a robot controller 2 for fitting the workpiece 200 into the workpiece fitted portions 211 and 212 are described with reference to Figs. 20 to 24.

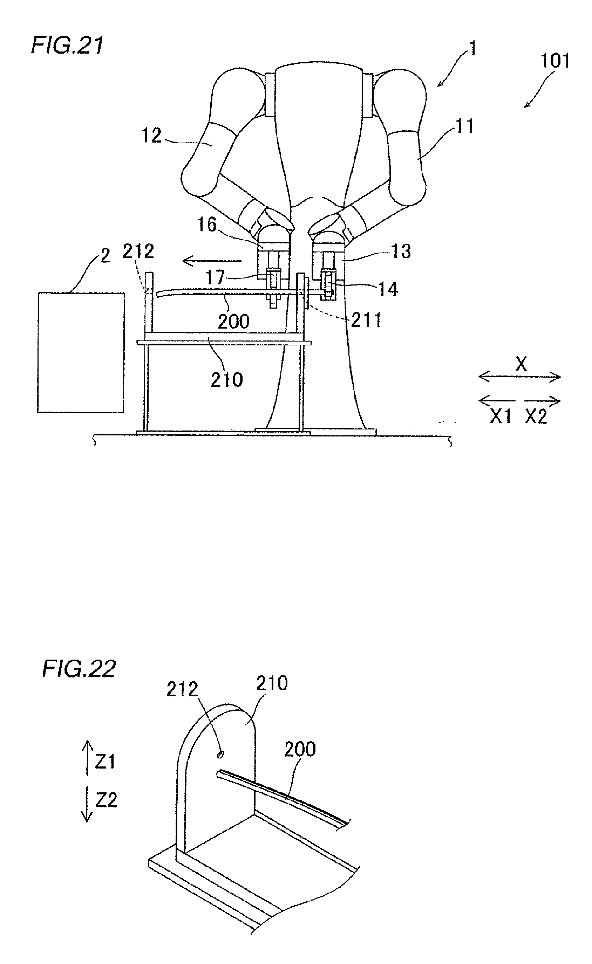

First, at a step S11 shown in Fig. 20, the control portion 21 performs control of fitting the workpiece 200 into the first workpiece fitted portion 211, similarly to the steps S1 to S6 according to the aforementioned first embodiment. Then, the control portion 21 controls an end effector 13 of a robot arm 11 to move the workpiece 200 along arrow X1 toward the workpiece fitted portion 212 (up to the vicinity of the workpiece fitted portion 212), as shown in Fig. 21. At this time, the base side of the workpiece 200 is fitted into the first workpiece fitted portion 211, and hence the workpiece 200 is hardly bent laterally and upward, but the forward end side of the workpiece 200 may be bent downwardly (along arrow Z2) due to its own weight, as shown in Fig. 22.

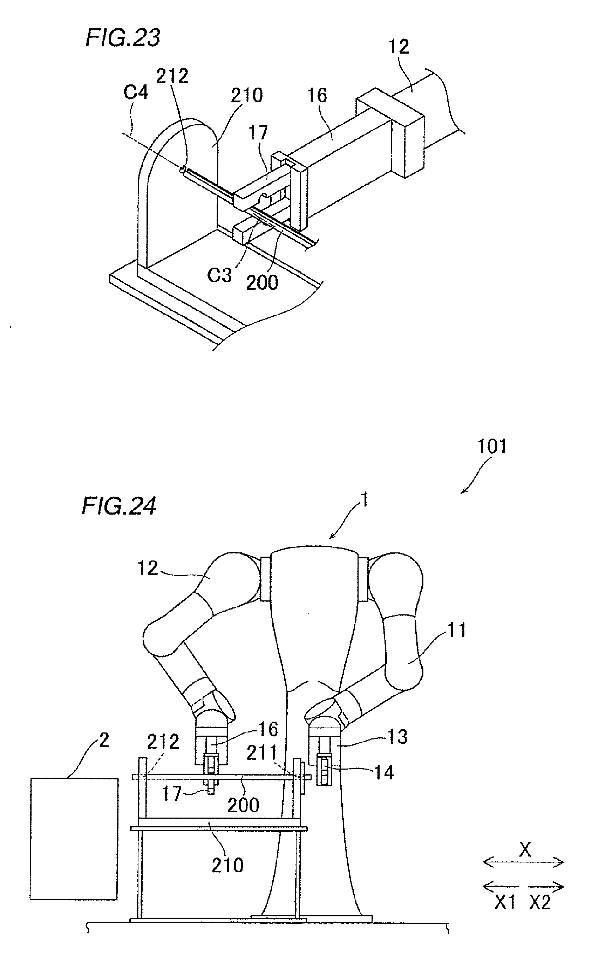

Next, according to the second embodiment, at a step S12, the control portion 21 moves a guiding end effector 16 of a robot arm 12 between the workpiece fitted portion 211 and the workpiece fitted portion 212. Then, at a step S13, the control portion 21 controls the guiding end effector 16 of the robot arm 12 to guide the workpiece 200 while movably grasping the forward end side of the workpiece 200 passing through the workpiece fitted portion 211. Specifically, the control portion 21 moves the guiding end effector 16 of the robot arm 12 along the workpiece 200 from the base side (see Fig. 21) of the workpiece 200 to the forward end side (see Fig. 23) thereof, and thereafter controls the guiding end effector 16 of the robot arm 12 to guide the workpiece 200 while movably grasping the forward end side of the workpiece 200. At this time, the guiding end effector 16 of the robot arm 12 guides the workpiece 200 while supporting the lower side (lower surface) of the workpiece 200. Consequently, the forward end side of the workpiece 200 which is bent downwardly (along arrow Z2) extends substantially linearly, as shown in Fig. 23. At this time, a centerline C3 passing through the guide center of the guiding end effector 16 (groove portions 17a of claw portions 17) of the robot arm 12 as viewed from the fitting direction and a centerline C4 passing through the center of the workpiece fitted portion 212 as viewed from the fitting direction substantially coincide with each other. Then, at a step S14, the control portion 21 controls the end effector 13 of the robot arm 11 to move the workpiece 200 along arrow X1 and fit the workpiece 200 into the workpiece fitted portion 212, as shown in Fig. 24, and the operations for fitting the workpiece 200 into the workpiece fitted portions 211 and 212 are terminated.

According to the second embodiment, as hereinabove described, the control portion 21 is configured to perform control of fitting the workpiece 200 into the workpiece fitted portion 212 by moving the guiding end effector 16 of the robot arm 12 between the workpiece fitted portion 211 and the workpiece fitted portion 212 and guiding the workpiece 200 while movably grasping the forward end side of the workpiece 200 passing through the workpiece fitted portion 211 by the guiding end effector 16 of the robot arm 12, after guiding the forward end side of the workpiece 200 by the guiding end effector 16 of the robot arm 12 and fitting the workpiece 200 into the workpiece fitted portion 211. Thus, the forward end side of the workpiece 200 is guided not only when the workpiece 200 is fitted into the workpiece fitted portion 211 but also when the workpiece 200 is fitted into the workpiece fitted portion 212, and hence the workpiece 200 can be smoothly fitted into the workpiece fitted portion 211 and the workpiece fitted portion 212.

According to the second embodiment, as hereinabove described, the control portion 21 is configured to perform control of moving the guiding end effector 16 of the robot arm 12 along the workpiece 200 from the base side of the workpiece 200 to the forward end side thereof and thereafter guiding the workpiece 200 while movably grasping the forward end side of the workpiece 200 by the guiding end effector 16 of the robot arm 12, after moving the guiding end effector 16 of the robot arm 12 between the workpiece fitted portion 211 and the workpiece fitted portion 212 and before fitting the workpiece 200 into the workpiece fitted portion 212. Thus, the workpiece 200 extends linearly by moving the guiding end effector 16 of the robot arm 12 along the workpiece 200 from the base side of the workpiece 200 to the forward end side thereof even if the forward end side of the workpiece 200 is bent downwardly, and hence the workpiece 200 can be smoothly fitted into the workpiece fitted portion 212.

### (Third Embodiment)

First, the structure of a robot system 102 according to a third embodiment is described with reference to Figs. 1, 2, 4 to 6, and 25 to 29.

As shown in Fig. 1, the robot system 102 includes a robot 1 and a robot controller 120. A workpiece fitted member 201 into which a workpiece 200 is fitted is arranged in the vicinity of the robot 1.

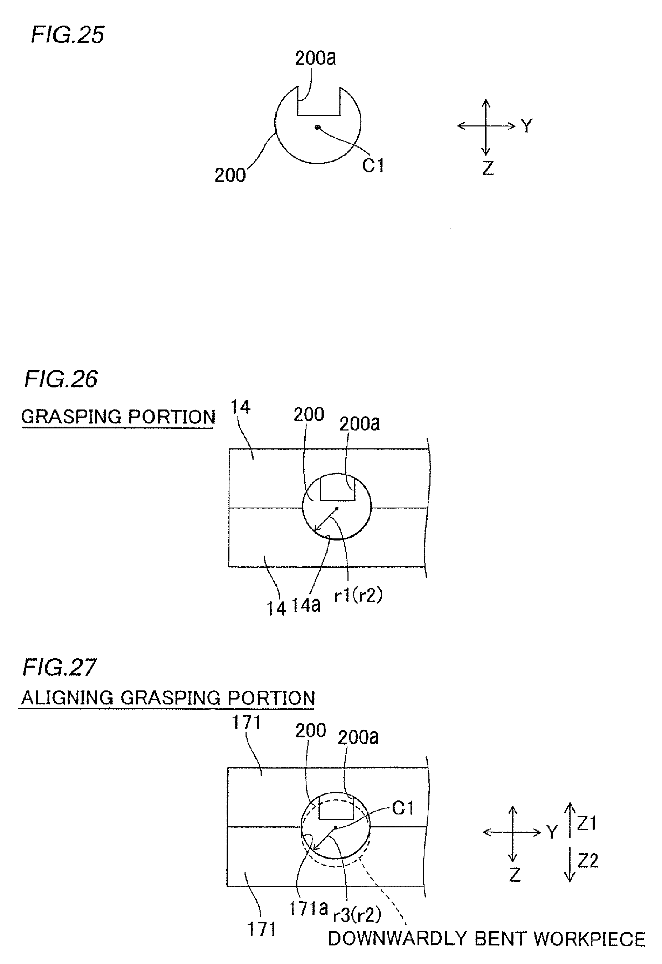

According to the third embodiment, the workpiece 200 is long bar-shaped, as shown in Fig. 2. Furthermore, the workpiece 200 has an incomplete circular cross-section, as shown in Fig. 25. Specifically, the workpiece 200 is formed with a groove portion 200a having a rectangular cross-section along the extensional direction of the workpiece 200. As shown in Figs. 4 and 5, the workpiece fitted member 201 is provided with a workpiece fitted portion 202 formed by an incomplete circular hole substantially coinciding with the cross-sectional shape of the workpiece 200. Specifically, the workpiece fitted portion 202 has a projecting portion 202a protruding downward (along arrow Z2) to correspond to the groove portion 200a of the workpiece 200. Furthermore, the workpiece fitted portion 202 is formed by a through-hole. A control portion 121, described later, of the robot controller 120 is configured to perform control of moving the workpiece 200 in a transverse direction (direction X) and fitting the workpiece 200 into the workpiece fitted portion 202.

As shown in Fig. 1, the robot 1 is a vertical articulated robot and includes two robot arms 11 and 12. The robot arm 11 has built-in actuators (not shown) with servomotors and speed reducers to correspond to rotation axes (seven axes, for example). Each of the servomotors is connected to the robot controller 120 and so configured that the operation thereof is controlled on the basis of an operation command from the robot controller 120. The robot arms 11 and 12 are examples of the "first robot arm" and the "second robot arm", respectively.

According to the third embodiment, an end effector 13 to grasp the base side (along arrow X2) of the workpiece 200 further distanced from the workpiece fitted portion 202 than the forward end side of the workpiece 200 grasped by an aligning end effector 161, described later, of the robot arm 12 is fitted is mounted on the forward end of the robot arm 11. As shown in Fig. 6, the end effector 13 is provided with a pair of claw portions 14 openable and closable by the unshown actuator, which are a gripper capable of grasping and holding the workpiece 200, according to the third embodiment. The claw portions 14 are provided with groove portions 14a having semicircular cross-sections. As shown in Fig. 26, the groove portions 14a are so configured that the radius r1 of each of the groove portions 14a is substantially equal to the radius r2 of the workpiece 200. The claw portions 14 are configured to come into contact with the workpiece 200 in a closed state to grasp the workpiece 200.

According to the third embodiment, a force sensor 15 is mounted between the robot arm 11 and the end effector 13, as shown in Fig. 6. The force sensor 15 is configured as a six-axis force sensor capable of detecting the translational force of an X-axis, a Y-axis, and a Z-axis and the rotation moments of the X-axis, the Y-axis, and the Z-axis.

According to the third embodiment, the aligning end effector 161 to align the workpiece 200 with the workpiece fitted portion 202 while grasping the forward end side (along arrow X1) of the workpiece 200 in the vicinity of the workpiece fitted portion 202 into which the workpiece 200 is fitted is mounted on the forward end of the robot arm 12, as shown in Fig. 1. The aligning end effector 161 is an end effector fixedly supporting (grasping) the workpiece 200. The aligning end effector 161 is an example of the "end effector". As shown in Fig. 27, the aligning end effector 161 is provided with a pair of claw portions 171 openable and closable by the unshown actuator. The claw portions 171 are provided with groove portions 171a having semicircular cross-sections. The groove portions 171a are so configured that the radius r3 of each of the groove portions 171a is substantially equal to the radius r2 of the workpiece 200. The claw portions 171 are configured to come into contact with the workpiece 200 in a closed state to grasp the workpiece 200. The aligning end effector 161 of the robot arm 12 grasps the long bar-shaped workpiece 200 while surrounding the periphery (outer periphery) of the workpiece 200 on the forward end side. If the workpiece 200 is bent (bent downwardly (along arrow Z2), for example), as shown by a dotted line in Fig. 27, the aligning end effector 161 grasps the workpiece 200 so that the workpiece 200 extends substantially linearly and is aligned with the workpiece fitted portion 202.

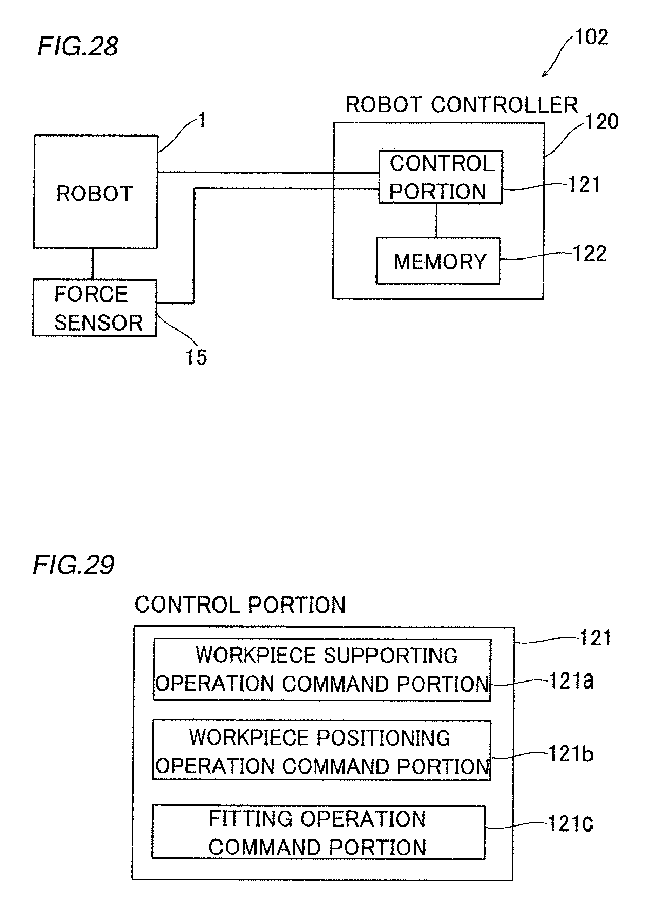

According to the third embodiment, the control portion 121 (see Fig. 28), described later, of the robot controller 120 is configured to perform control of aligning the workpiece 200 with the workpiece fitted portion 202 while grasping the forward end side of the workpiece 200 in the vicinity of the workpiece fitted portion 202 into which the workpiece 200 is fitted by the aligning end effector 161 of the robot arm 12 and control of grasping the base side of the workpiece 200 further distanced from the workpiece fitted portion 202 than the forward end side of the workpiece 200 grasped by the aligning end effector 161 of the robot arm 12 by the end effector 13 of the robot arm 11. Furthermore, the control portion 121 is configured to perform control of fitting the workpiece 200 into the workpiece fitted portion 202 by moving the robot arm 11 and the robot arm 12 in a coordinated manner.

As shown in Fig. 28, the robot controller 120 is provided with the control portion 121 and a memory 122. The memory 122 is connected to the control portion 121. The robot 1 and the force sensor 15 are connected to the control portion 121 of the robot controller 120. According to the third embodiment, the control portion 121 has a workpiece supporting operation command portion 121a causing at least one of the robot arm 11 and the robot arm 12 to perform an operation of supporting (grasping) the workpiece 200, a workpiece positioning operation command portion 121b causing the aligning end effector 161 of the robot arm 12 to align the workpiece 200 with the workpiece fitted portion 202 while supporting (grasping) the forward end side of the workpiece 200 in the vicinity of the workpiece fitted portion 202 into which the workpiece 200 is fitted, and a fitting operation command portion 121c causing the robot arm 11 and the robot arm 12 to move in a coordinated manner while causing the end effector 13 of the robot arm 11 to support (grasp) the base side of the workpiece 200 further distanced from the workpiece fitted portion 202 than the forward end side of the workpiece 200 supported (grasped) by the aligning end effector 161 of the robot arm 12 to fit the workpiece 200 into the workpiece fitted portion 202, as shown in Fig. 29.

Next, operations of the control portion 121 of the robot controller 120 for fitting the workpiece 200 into the workpiece fitted portion 202 are described with reference to Figs. 17, 18, 30, and 31.

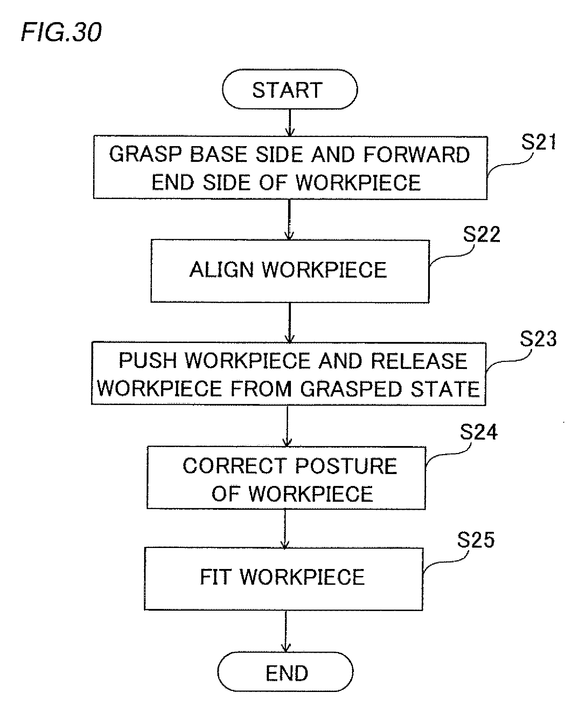

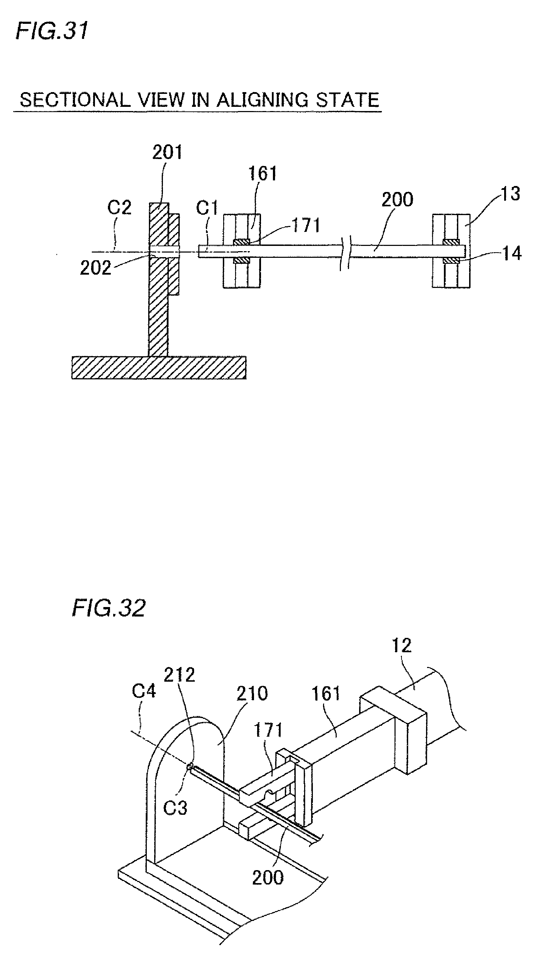

First, at a step S21 shown in Fig. 30, the control portion 121 controls the end effector 13 (claw portions 14) of the robot arm 11 to grasp the base side of the workpiece 200 distanced from the workpiece fitted portion 202, as shown in Fig. 31. Furthermore, the control portion 121 controls the aligning end effector 161 of the robot arm 12 to grasp the forward end side of the workpiece 200.

Then, according to the third embodiment, at a step S22, the control portion 121 controls the aligning end effector 161 of the robot arm 12 to align the workpiece 200 with the workpiece fitted portion 202 while grasping the forward end side of the workpiece 200 in the vicinity of the workpiece fitted portion 202 into which the workpiece 200 is fitted. Specifically, the control potion 121 controls the aligning end effector 161 of the robot arm 12 to align the workpiece 200 with the workpiece fitted portion 202 while grasping the forward end side of the workpiece 200 such that a centerline C1 passing through the center (center in directions Y and Z, see Figs. 25 and 27) of the workpiece 200 grasped by the aligning end effector 161 (groove portions 171a of the claw portions 171) of the robot arm 12 as viewed from a fitting direction and a centerline C2 passing through the center (center in the directions Y and Z, see Fig. 5) of the workpiece fitted portion 202 as viewed from the fitting direction substantially coincide with each other, as shown in Fig. 31. Thus, the posture (form) of the workpiece 200 is corrected to be fittable (fittable by rotating the workpiece 200, as described later) even if the forward end side of the workpiece 200 is warped or the workpiece 200 is grasped in a state deviating from (intersecting with) the fitting direction by the end effector 13 of the robot arm 11.

Then, according to the third embodiment, at a step S23, the control portion 121 operates the robot arm 11 and the robot arm 12 to push the workpiece 200 toward the workpiece fitted portion 202 (workpiece fitted member 201), as shown in Fig. 17. Thereafter, the control portion 121 releases the workpiece 200 from a state grasped by the robot arm 12 before fitting the workpiece 200 into the workpiece fitted portion 202.

Then, according to the third embodiment, at a step S24, after pushing the workpiece 200 against the workpiece fitted portion 202 (workpiece fitted member 201), the control portion 121 operates the robot arm 11 on the basis of reaction force information obtained from the force sensor 15 when pushing the workpiece 200 against the workpiece fitted portion 202. Thus, the posture of the workpiece 200 is corrected to be fittable into the workpiece fitted portion 202. Specifically, the control portion 121 performs control of correcting the posture of the workpiece 200 to be fittable into the workpiece fitted portion 202 by rotating the workpiece 200 on the basis of the reaction force information obtained from the force sensor 15 (until reaction force from the workpiece fitted portion 202 (workpiece fitted member 201) is no longer detected, for example), employing the pushing direction (direction X) of the workpiece 200 as a rotation axis, as shown in Fig. 17. More specifically, the control portion 121 performs control of correcting the posture of the workpiece 200 to direct an opening of the groove portion 200a (see Fig. 25) of the workpiece 200 along arrow Z1 (match the groove portion 200a and the projecting portion 202a of the workpiece fitted portion 202). The workpiece 200 is pushed in a previously aligned state so that the position of the workpiece 200 on the forward end side only slightly (hardly) deviates from the workpiece fitted portion 202, but if the posture (form) of the workpiece 200 is not fittable (fittable by rotating the workpiece 200) even in a state where the workpiece 200 is aligned, the workpiece 200 is translated with respect to the workpiece fitted portion 202 (workpiece fitted member 201) (on a plane Y-Z) in order to search the workpiece fitted portion 202.

Then, at a step S25, the control portion 121 controls the robot arm 11 to move the workpiece 200 in the transverse direction (along arrow X1) and starts an operation of fitting the workpiece 200 into the workpiece fitted portion 202, as shown in Fig. 18. If the force sensor 15 detects reaction force during the operation of fitting the workpiece 200 into the workpiece fitted portion 202, the control portion 121 controls the robot arm 11 to correct the posture of the workpiece 200 in a direction in which the reaction force is not detected. This ends the operations for fitting the workpiece 200 into the workpiece fitted portion 202.

According to the third embodiment, as hereinabove described, the control portion 121 is configured to have the fitting operation command portion 121c causing the robot arm 11 and the robot arm 12 to move in a coordinated manner while causing the end effector 13 of the robot arm 11 to support the base side of the workpiece 200 further distanced from the workpiece fitted portion 202 than the forward end side of the workpiece 200 supported by the aligning end effector 161 of the robot arm 12 to fit the workpiece 200 into the workpiece fitted portion 202. Thus, the robot arm 11 and the robot arm 12 move in a coordinated manner while the aligning end effector 161 of the robot arm 12 aligns the forward end side of the workpiece 200 to fit the workpiece 200 into the workpiece fitted portion 202, and hence the workpiece 200 can be more efficiently fitted into the workpiece fitted portion 202 by the two robot arms (robot arms 11 and 12).

According to the third embodiment, as hereinabove described, the aligning end effector 161 of the robot arm 12 aligns the workpiece 200 with the workpiece fitted portion 202 while grasping the forward end side of the workpiece 200 such that the centerline C1 passing through the center of the workpiece 200 grasped by the aligning end effector 161 (groove portions 171a of the claw portions 171) of the robot arm 12 as viewed from the fitting direction and the centerline C2 passing through the center of the workpiece fitted portion 202 as viewed from the fitting direction substantially coincide with each other. Thus, the forward end side of the workpiece 200 can be easily fitted into the workpiece fitted portion 202.

According to the third embodiment, as hereinabove described, the control portion 121 is configured to release the workpiece 200 from the state grasped by the robot arm 12, after aligning the workpiece 200 with the workpiece fitted portion 202 while grasping the forward end side of the workpiece 200 by the aligning end effector 161 of the robot arm 12 and operating the robot arm 11 and the robot arm 12 to push the workpiece 200 toward the workpiece fitted portion 202 and before fitting the workpiece 200 into the workpiece fitted portion 202. Thus, the aligning end effector 161 of the robot arm 12 can be inhibited from disturbing translation or rotation of the workpiece 200 when the workpiece 200 is translated or rotated in order to search the workpiece fitted portion 202.

According to the third embodiment, as hereinabove described, the control portion 121 is configured to perform control of correcting the posture of the workpiece 200 to be fittable into the workpiece fitted portion 202 by pushing the workpiece 200 against the workpiece fitted portion 202 and operating the robot arm 11 on the basis of the reaction force information obtained from the force sensor 15 when pushing the workpiece 200 against the workpiece fitted portion 202, after releasing the workpiece 200 from the state grasped by the robot arm 12 and before fitting the workpiece 200 into the workpiece fitted portion 202. Thus, the posture of the workpiece 200 is corrected to be fittable into the workpiece fitted portion 202 even if the posture of the workpiece 200 is not fittable into the workpiece fitted portion 202, and hence the workpiece 200 can be smoothly fitted into the workpiece fitted portion 202. Especially because the workpiece 200 is pushed in a state previously aligned by the robot arm 12, the position of the workpiece 200 on the forward end side only slightly (hardly) deviates from the workpiece fitted portion 202. Thus, it is not necessary to significantly correct the posture (position) of the workpiece 200, and hence the workpiece 200 can be smoothly and promptly fitted into the workpiece fitted portion 202.

According to the third embodiment, as hereinabove described, the control portion 121 is configured to perform control of correcting the posture of the workpiece 200 to be fittable into the workpiece fitted portion 202 by rotating the workpiece 200, employing the pushing direction of the workpiece 200 as the rotation axis, after releasing the workpiece 200 from the state grasped by the robot arm 12 and before fitting the workpiece 200 into the workpiece fitted portion 202 by the robot arm 11. Thus, the workpiece 200 can be rotated, employing the pushing direction of the workpiece 200 as the rotation axis to be easily fitted into the workpiece fitted portion 202, even if the opening direction of the groove portion 200a of the workpiece 200 and the protruding direction of the projecting portion 202a of the workpiece fitted portion 202 do not coincide with each other whereas the centerline C1 (see Fig. 25) passing through the center of the workpiece 200 grasped by the aligning end effector 161 of the robot arm 12 as viewed from the fitting direction and the centerline C2 of the workpiece fitted portion 202 coincide with each other.

According to the third embodiment, the control portion 121 is configured to perform control of moving the workpiece 200 in the transverse direction and fitting the workpiece 200 into the workpiece fitted portion 202. The posture (form) of the long bar-shaped workpiece 200 is likely to become inappropriate due to deflection or the like caused by its own weight when the long bar-shaped workpiece 200 is fitted in a laid state, and hence the long bar-shaped workpiece 200 can be easily fitted into the workpiece fitted portion 202 by aligning the workpiece 200 while movably grasping the forward end side of the workpiece 200 in this case.

According to the third embodiment, as hereinabove described, the control portion 121 is configured to control the aligning end effector 161 of the robot arm 12 to grasp the forward end side of the workpiece 200 while surrounding the periphery of the long bar-shaped workpiece 200 on the forward end side. Thus, the aligning end effector 161 of the robot arm 12 can easily align the workpiece 200 with the workpiece fitted portion 202 while grasping the forward end side of the workpiece 200 even if the workpiece 200 is bent (deformed) in any direction of outer peripheral directions (see Fig. 27).

### (Fourth Embodiment)

First, the structure of a robot system 103 according to a fourth embodiment is described with reference to Fig. 19. In this fourth embodiment, a workpiece 200 is fitted into two workpiece fitted portions 211 and 212, dissimilarly to the aforementioned third embodiment in which the workpiece 200 is fitted into the single workpiece fitted portion 202. The workpiece fitted portions 211 and 212 are examples of the "first workpiece fitted portion" and the "second workpiece fitted portion", respectively.

As shown in Fig. 19, a workpiece fitted member 210 into which the workpiece 200 is fitted is arranged in the vicinity of a robot 1. The workpiece fitted member 210 includes the workpiece fitted portion 211 and the workpiece fitted portion 212 formed by through-holes arranged adjacent to each other in the fitting direction (direction X) of the workpiece 200. The workpiece fitted portion 211 and the workpiece fitted portion 212 each are formed by an incomplete circular hole substantially coinciding with the cross-sectional shape of the workpiece 200, similarly to the workpiece fitted portion 202 (see Fig. 5) according to the aforementioned third embodiment. The remaining structure of the robot system 103 according to the fourth embodiment is similar to that of the robot system 102 according to the aforementioned third embodiment.

Next, operations of a control portion 121 of a robot controller 120 for fitting the workpiece 200 into the workpiece fitted portions 211 and 212 are described with reference to Figs. 20 to 24.

First, at a step S11 shown in Fig. 20, the control portion 121 controls an aligning end effector 161 of a robot arm 12 to align the workpiece 200 with the workpiece fitted portion 211 while grasping the forward end side of the workpiece 200 and controls an end effector 13 of a robot arm 11 to grasp the base side of the workpiece 200 distanced from the workpiece fitted portion 211, similarly to the steps S21 to S25 according to the aforementioned third embodiment. Then, the control portion 121 causes the robot arm 11 and the robot arm 12 to move in a coordinated manner to fit the workpiece 200 into the workpiece fitted portion 211. Thereafter, the control portion 121 controls the end effector 13 of the robot arm 11 to move the workpiece 200 along arrow X1 up to the vicinity of the workpiece fitted portion 212, as shown in Fig. 21. At this time, the base side of the workpiece 200 is fitted into the first workpiece fitted portion 211, and hence the workpiece 200 is hardly bent laterally and upward, but the forward end side of the workpiece 200 may be bent downwardly (along arrow Z2) due to its own weight, as shown in Fig. 22.

Next, according to the fourth embodiment, at a step S12, the control portion 121 moves the aligning end effector 161 of the robot arm 12 between the workpiece fitted portion 211 and the workpiece fitted portion 212. Then, at a step S13, the control portion 121 controls the aligning end effector 161 of the robot arm 12 to guide the workpiece 200 while movably grasping the forward end side of the workpiece 200 passing through the workpiece fitted portion 211, dissimilarly to a case of fitting the workpiece 200 into the first workpiece fitted portion 211 with which the workpiece 200 is aligned. Specifically, the control portion 121 moves the aligning end effector 161 of the robot arm 12 along the workpiece 200 from the base side (see Fig. 21) of the workpiece 200 to the forward end side (see Fig. 32) thereof, and thereafter controls the aligning end effector 161 of the robot arm 12 to guide the workpiece 200 while movably grasping the forward end side of the workpiece 200. At this time, the aligning end effector 161 of the robot arm 12 guides the workpiece 200 while supporting the lower side (lower surface) of the workpiece 200. Consequently, the forward end side of the workpiece 200 which is bent downwardly (along arrow Z2) extends substantially linearly, as shown in Fig. 32. At this time, a centerline C3 passing through the center of the workpiece 200 grasped by the aligning end effector 161 (groove portions 171a of claw portions 171) of the robot arm 12 as viewed from the fitting direction and a centerline C4 passing through the center of the workpiece fitted portion 212 as viewed from the fitting direction substantially coincide with each other. Then, at a step S14, the control portion 121 controls the end effector 13 of the robot arm 11 to move the workpiece 200 along arrow X1 and fit the workpiece 200 into the workpiece fitted portion 212, as shown in Fig. 24, and the operations for fitting the workpiece 200 into the workpiece fitted portions 211 and 212 are terminated.

According to the fourth embodiment, as hereinabove described, the control portion 121 is configured to perform control of fitting the workpiece 200 into the workpiece fitted portion 212 by moving the aligning end effector 161 of the robot arm 12 between the workpiece fitted portion 211 and the workpiece fitted portion 212 and guiding the workpiece 200 while movably grasping the forward end side of the workpiece 200 passing through the workpiece fitted portion 211 by the aligning end effector 161 of the robot arm 12, after aligning the forward end side of the workpiece 200 with the workpiece fitted portion 211 while grasping the forward end side of the workpiece 200 in the vicinity of the workpiece fitted portion 211 by the aligning end effector 161 of the robot arm 12 and fitting the workpiece 200 into the workpiece fitted portion 211 by the end effector 13 of the robot arm 11. Thus, the workpiece 200 is aligned when the workpiece 200 is fitted into the workpiece fitted portion 211, while the forward end side of the workpiece 200 is guided when the workpiece 200 is fitted into the workpiece fitted portion 212, and hence the workpiece 200 can be smoothly fitted into the workpiece fitted portion 211 and the workpiece fitted portion 212.

According to the fourth embodiment, as hereinabove described, the control portion 121 is configured to perform control of moving the aligning end effector 161 of the robot arm 12 along the workpiece 200 from the base side of the workpiece 200 to the forward end side thereof and thereafter guiding the workpiece while movably grasping the forward end side of the workpiece 200 by the aligning end effector 161 of the robot arm 12, after moving the aligning end effector 161 of the robot arm 12 between the workpiece fitted portion 211 and the workpiece fitted portion 212 and before fitting the workpiece 200 into the workpiece fitted portion 212. Thus, the workpiece 200 extends substantially linearly by moving the aligning end effector 161 of the robot arm 12 along the workpiece 200 from the base side of the workpiece 200 to the forward end side thereof even if the forward end side of the workpiece 200 is bent downwardly, and hence the workpiece 200 can be smoothly fitted into the workpiece fitted portion 212.

It should be understood by those skilled in the art that various modifications, combinations, sub-combinations, and alterations may occur depending on design requirements and other factors insofar as they are within the scope of the appended claims or the equivalents thereof.

For example, while the guiding end effector of the robot arm grasps the workpiece and guides the forward end side of the workpiece in each of the aforementioned first and second embodiments, the guiding end effector of the robot arm may alternatively support the workpiece (support only the lower side of the workpiece, for example) and guide the forward end side of the workpiece, for example.

While the forward end side of the workpiece is guided such that the centerline passing through the guide center of the guiding end effector of the robot arm as viewed from the fitting direction and the centerline passing through the center of the workpiece fitted portion substantially coincide with each other in each of the aforementioned first and second embodiments, the forward end side of the workpiece may alternatively be guided such that the height position of the inner bottom surface of the end effector (groove portion of the claw portion) of the robot arm and the height position of the inner bottom surface of the workpiece fitted portion formed by the hole substantially coincide with each other, for example.

While the workpiece is released from the guided state after the workpiece is pushed toward the workpiece fitted portion in each of the aforementioned first and second embodiments, the workpiece may not be released from the guided state when the workpiece is translated or rotated (fitted) if the size of a clearance between the workpiece and the end effector is such a size that translation or rotation of the workpiece is not disturbed, for example.

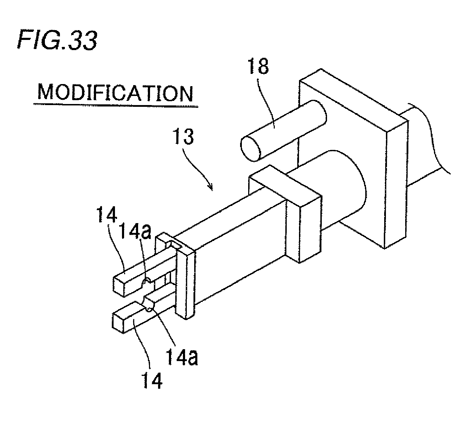

While the robot arm is provided with the force sensor and operated on the basis of the reaction force information obtained from the force sensor in each of the aforementioned first and second embodiments, a robot arm 11 may alternatively be provided with a visual sensor and operated on the basis of image information obtained from the visual sensor 18 in order to correct the posture of a workpiece 200 to be fittable into a workpiece fitted portion 202, as shown in a modification in Fig. 33, for example.

While the workpiece has the incomplete circular cross-section provided with the groove portion and the workpiece fitted portion is formed by the incomplete circular hole provided with the projecting portion in each of the aforementioned first and second embodiments, the cross-section of the workpiece may alternatively be elliptical (triangular, quadrangular, or the like) and the workpiece fitted portion may alternatively be formed by an incomplete circular hole of an elliptical shape (triangular shape, quadrangular shape, or the like), for example. Alternatively, the workpiece may have a circular cross-section and the workpiece fitted portion may be formed by a circular hole.

While the workpiece is long bar-shaped and moved in the transverse direction to be fitted into the workpiece fitted portion in each of the aforementioned first and second embodiments, the workpiece may alternatively be moved in the longitudinal direction to be fitted into the workpiece fitted portion, for example. Furthermore, the workpiece may alternatively be in a shape other than a long bar shape.

While the end effector of the robot arm surrounds the periphery (outer periphery) of the long bar-shaped workpiece and guides the workpiece in each of the aforementioned first and second embodiments, the end effector of the robot arm may alternatively partially support the outer periphery of the long bar-shaped workpiece and guide the workpiece, for example.

While the workpiece is rotated, employing the pushing direction of the workpiece as the rotation axis (see the step S5 in Fig. 13 and Fig. 17) after the workpiece is pushed against the workpiece fitted portion in each of the aforementioned first and second embodiments, the operation of fitting the workpiece into the workpiece fitted portion may alternatively be performed without rotation of the workpiece if the workpiece is grasped in a state fittable into the workpiece fitted portion without rotation of the workpiece, for example.

While the respective end effectors of the two robot arms grasp the workpiece in each of the aforementioned third and fourth embodiments, the respective end effectors of the two robot arms may alternatively support the workpiece in a way other than grasping, for example.

While the end effector of the robot arm (first robot arm) grasps the base side of the workpiece in each of the aforementioned third and fourth embodiments, the end effector of the robot arm (first robot arm) may alternatively grasp a central portion of the workpiece, for example, so far as the central portion of the workpiece is closer to the base side of the workpiece distanced from the workpiece fitted portion than the forward end side of the workpiece grasped by the end effector of the robot arm (second robot arm).

While the aligning end effector of the robot arm grasps the forward end side of the workpiece and aligns the workpiece with the workpiece fitted portion such that the centerline passing through the center of the workpiece grasped by the aligning end effector of the robot arm as viewed from the fitting direction and the centerline passing through the center of the workpiece fitted portion substantially coincide with each other in each of the aforementioned third and fourth embodiments, the workpiece may alternatively be aligned with the workpiece fitted portion such that the height position of the inner bottom surface of the end effector (groove portion of the claw portion) of the robot arm and the height position of the inner bottom surface of the workpiece fitted portion formed by the hole substantially coincide with each other, for example.

While the end effector of the robot arm surrounds the periphery (outer periphery) of the long bar-shaped workpiece, grasps the forward end side of the workpiece, and aligns the workpiece with the workpiece fitted portion in each of the aforementioned third and fourth embodiments, the end effector of the robot arm may alternatively partially support the outer periphery of the long bar-shaped workpiece and align the workpiece with the workpiece fitted portion, for example.

## Claims

1. A robot system (100, 101, 102, 103) fitting a workpiece (200) into a workpiece fitted portion (202, 211, 212), comprising:
a first robot arm (11) and a second robot arm (12) each mounted with an end effector (13, 16, 161); and
a control portion (21, 121) to control the first robot arm and the second robot arm, wherein
the control portion includes:
a workpiece supporting operation command portion (21a, 121a) causing at least one of the first robot arm and the second robot arm to perform an operation of supporting the workpiece,
a workpiece positioning operation command portion (21b, 121b) causing the second robot arm to move the workpiece toward the workpiece fitted portion while causing the end effector of the second robot arm to support the workpiece, and
a fitting operation command portion (21c, 121c) causing at least the first robot arm of the first robot arm and the second robot arm to fit the workpiece into the workpiece fitted portion.

2. The robot system according to claim 1, wherein
the workpiece positioning operation command portion is configured to move the workpiece to a vicinity of the workpiece fitted portion while causing the end effector of the second robot arm to support the workpiece.

3. The robot system according to claim 1, wherein
the workpiece positioning operation command portion is configured to cause the second robot arm to move the workpiece toward the workpiece fitted portion while causing the end effector of the second robot arm to movably support the workpiece, and
the fitting operation command portion is configured to cause the first robot arm to fit the workpiece into the workpiece fitted portion while causing the end effector of the second robot arm to guide the workpiece toward the workpiece fitted portion.

4. The robot system according to claim 3, wherein
the workpiece positioning operation command portion of the control portion is configured to control the end effector of the second robot arm to guide the workpiece while movably grasping a forward end side of the workpiece such that a centerline passing through a guide center of the end effector of the second robot arm as viewed from a fitting direction and a centerline passing through a center of the workpiece fitted portion as viewed from the fitting direction coincide with each other.

5. The robot system according to claim 3, wherein
the fitting operation command portion of the control portion is configured to release the workpiece from a state guided by the second robot arm, after operating the first robot arm to push the workpiece toward the workpiece fitted portion in a state where the end effector of the second robot arm guides the workpiece while movably grasping a forward end side of the workpiece and before fitting the workpiece into the workpiece fitted portion.

6. The robot system according to claim 5, further comprising a visual sensor (18) or a force sensor (15) provided on the first robot arm, wherein
the fitting operation command portion of the control portion is configured to perform control of correcting a posture of the workpiece to be fittable into the workpiece fitted portion by operating the first robot arm on the basis of image information or reaction force information obtained from the visual sensor or the force sensor, after releasing the workpiece from the state guided by the second robot arm and before fitting the workpiece into the workpiece fitted portion.

7. The robot system according to claim 6, wherein
the first robot arm includes the force sensor, and
the fitting operation command portion of the control portion is configured to perform control of correcting the posture of the workpiece to be fittable into the workpiece fitted portion by pushing the workpiece against the workpiece fitted portion and operating the first robot arm on the basis of the reaction force information obtained from the force sensor when pushing the workpiece against the workpiece fitted portion, after releasing the workpiece from the state guided by the second robot arm and before fitting the workpiece into the workpiece fitted portion.

8. The robot system according to claim 5, wherein
the workpiece has an incomplete circular cross-section while the workpiece fitted portion is formed by an incomplete circular hole coinciding with a cross-sectional shape of the workpiece, and
the control portion is configured to perform control of correcting a posture of the workpiece to be fittable into the workpiece fitted portion by rotating the workpiece, employing a pushing direction of the workpiece as a rotation axis, after releasing the workpiece from the state guided by the second robot arm and before fitting the workpiece into the workpiece fitted portion by the first robot arm.

9. The robot system according to claim 3, wherein
the workpiece includes a long bar-shaped workpiece, and
the control portion is configured to perform control of moving the workpiece in a transverse direction and fitting the workpiece into the workpiece fitted portion.

10. The robot system according to claim 9, wherein
the control portion is configured to control the end effector of the second robot arm to guide the workpiece while movably surrounding a periphery of the long bar-shaped workpiece on a forward end side.

11. The robot system according to claim 3, wherein
the workpiece fitted portion includes a first workpiece fitted portion (211) and a second workpiece fitted portion (212) formed by through-holes arranged adjacent to each other in a fitting direction of the workpiece, and
the control portion is configured to perform control of fitting the workpiece into the second workpiece fitted portion by moving the end effector of the second robot arm between the first workpiece fitted portion and the second workpiece fitted portion and guiding the workpiece while movably grasping a forward end side of the workpiece passing through the first workpiece fitted portion by the end effector of the second robot arm, after guiding the forward end side of the workpiece by the end effector of the second robot arm and fitting the workpiece into the first workpiece fitted portion.

12. The robot system according to claim 11, wherein
the control portion is configured to perform control of moving the end effector of the second robot arm along the workpiece from a base side of the workpiece to the forward end side thereof and thereafter guiding the workpiece while movably grasping the forward end side of the workpiece by the end effector of the second robot arm, after moving the end effector of the second robot arm between the first workpiece fitted portion and the second workpiece fitted portion and before fitting the workpiece into the second workpiece fitted portion.

13. The robot system according to claim 1, wherein
the workpiece positioning operation command portion is configured to cause the end effector of the second robot arm to align the workpiece with the workpiece fitted portion while supporting a forward end side of the workpiece in a vicinity of the workpiece fitted portion into which the workpiece is fitted, and
the fitting operation command portion is configured to cause the first robot arm and the second robot arm to move in a coordinated manner while causing the end effector of the first robot arm to support a base side of the workpiece further distanced from the workpiece fitted portion than the forward end side of the workpiece supported by the end effector of the second robot arm to fit the workpiece into the workpiece fitted portion.

14. A method for manufacturing a fitting formed by fitting a workpiece (200) into a workpiece fitted portion (202, 211, 212), comprising:
supporting the workpiece by at least one of a first robot arm (11) and a second robot arm (12);
moving the workpiece toward the workpiece fitted portion by the second robot arm while supporting the workpiece by an end effector of the second robot arm; and
fitting the workpiece into the workpiece fitted portion by at least the first robot arm of the first robot arm and the second robot arm.

15. The method for manufacturing a fitting according to claim 14, wherein
moving the workpiece toward the workpiece fitted portion by the second robot arm while supporting the workpiece by the end effector of the second robot arm includes moving the workpiece to a vicinity of the workpiece fitted portion by the second robot arm while supporting the workpiece by the end effector of the second robot arm.
